(19) Europäisches Patentamt / European Patent Office / Office européen des brevets

(11) **EP 2 824 969 A1**

(12) **EUROPEAN PATENT APPLICATION**
published in accordance with Art. 153(4) EPC

(43) Date of publication:
**14.01.2015 Bulletin 2015/03**

(51) Int Cl.:
**H04W 48/16** (2009.01)     **H04W 24/02** (2009.01)

(21) Application number: **13757361.4**

(22) Date of filing: **28.02.2013**

(86) International application number:
**PCT/JP2013/055306**

(87) International publication number:
**WO 2013/133114 (12.09.2013 Gazette 2013/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **05.03.2012 JP 2012048570**

(71) Applicant: **Japan Science and Technology Agency Kawaguchi-shi, Saitama 332-0012 (JP)**

(72) Inventors:
• **HASEGAWA, Mikio**
  **Tokyo 1020073 (JP)**
• **MATSUI, Takumi**
  **Tokyo 1020073 (JP)**

(74) Representative: **Gosdin, Michael**
  **Adam-Stegerwald-Strasse 6**
  **97422 Schweinfurt (DE)**

(54) **NETWORK SELECTION METHOD IN WIRELESS COMMUNICATION NETWORK AND WIRELESS COMMUNICATION NETWORK SYSTEM**

(57) An object of the present invention is to optimize fairness of throughput in terminal devices in a wireless communication network, and to provide a technique for selecting combinations of the terminal devices and wireless network access. A method of selecting a destination network that optimizes throughput fairness of terminal devices in a wireless communication network system including a plurality of wireless access networks, and terminal devices that correspond to a plurality of types of wireless access networks, including: modeling a problem combining terminal devices to be optimized and a connection target network, as a minimum cost flow problem; calculating an exact solution of the minimum cost flow problem by computer operating means; and calculating the results of combining the terminal devices and the connection target network using network selection results operating means of a computer.

[FIG. 1]

EP 2 824 969 A1

## Description

### Technical Field

The present invention relates to a network selection method in a wireless communication network, and more particularly relates to a selection method of a destination network that optimizes fairness of throughput in terminal devices.

### Background Technology

Research related to recent cognitive wireless technology is being evaluated as a technology that efficiently uses a limited wireless resource. For example, Non-patent Literature 1 discloses research of a software wireless technology that can connect to different wireless interfaces to change to a different wireless system.

Furthermore, a peripheral technology being developed, such as research of a technology that seamlessly hands over a different wireless network (refer to Non-patent Literature 2 and 3) or the like.

Wireless selection depending on the situation and the communication quality and fairness can be improved with the heterogeneous type cognitive wireless technology that actively uses a terminal that can connect to a different wireless network. As a specific example, a large scale empirical experiment that uses a cognitive wireless router is currently in progress. (Refer to Non-patent Literature 4).

The combinations of wireless access network selection problems that come with these systems, such as load distribution and the like, increases tremendously in conjunction with an increase in the number of terminals and base stations, and has become a NP difficult problem for which exact solutions cannot be attained within a realistic time period.

Because of these problems, existing methods include a wireless terminal automatically selecting a base station or implementing a neural network.

Furthermore, IEEE 1900.4, a standard specification that defines the basic architecture and functions and tries to use wireless resources optimally by distributing the decision-making to the network and the terminal, was disclosed on February 27, 2009. (Refer to Non-patent Literature 5)

Patent Document 1 discloses a configuration of a wireless connection terminal connected to a wireless base station where neurons firing decisions are made in a neural network calculating device where neuronal firing is associated with selection of the wireless base station selection, in a wireless communication network system that automatically selects the wireless base station to which the wireless communication terminal connects.

Patent Document 2 discloses a technology that distributes the load of the wireless network by switching the access point when the difference of the delay cost between the two access points and the cost when switching the access point are compared, and the former exceeds the cost of the latter.

Furthermore, a decentralized base station selection architecture is disclosed in Non-patent Literature.

On the other hand, there are general problems that are known regarding a flow network such as maximum flow problems, minimum cost flow problems, other various flow problems, circulation flow problems, and the like, and technology to resolve these problems by solution methods are being proposed as, for example, a network of a pipework of water pipes.

Patent Document 3 is an example thereof, and proposes drafting a dynamic planning value of a water conveyance amount, a water supply amount, and a water storage amount by selecting each element of a water supply system as arcs and nodes, and formulizing to a minimum cost flow problem.

### Prior Art Documents

### Patent Documents

[Patent Document 1]:    Japanese Unexamined Patent Application 2009-55467

[Patent Document 2]:    US Patent No. 8098637

[Patent Document 3]:    Patent No. JP 3425160

### Non-Patent Literature

[Non-patent Literature 1]: H. Harada, "Software defined radio prototype toward Cognitive Radio Communication Systems," IEEE Dyspan 2005, Vol.1, pp. 539-547, 2005

[Non-patent Literature 2]: G. Wu, P. Havinga and M. Mizuno, "MIRAI Architecture for Heterogeneous Networks," IEEE Comm. Mag., pp. 126-134, 2002

[Non-patent Literature 3]: M. Inoue, K. Mahmud, H. Murakami, M. Hasegawa and H. Morikawa, "Novel Out-Of-Band Signaling for Seamless Inter-working between Heterogeneous Networks," IEEE Wireless Commun., Vol. 11, No. 2, pp. 56-63,2004

[Non-patent Literature 4]: K.Ishizu et al., IEICE Trans., E93-B,3311-3322, 2010

[Non-patent Literature 5]: "IEEE Standard for Architectural Building Blocks Enabling Network-Device Distributed Decision Making for Optimized Radio Resource Usage in Heterogeneous Wireless Access Networks," IEEE 1900.4-2009, Feb. 2009

[Non-patent Literature 6]: Y.Fukuda, YOie, "Decentralized access point selection architecture for wireless LANs" IEEE VTC2004-Fall, pp.1103-1107, 2004

[Non-patent Literature 7]: A.V.Goldberg, J.Algorithms, 22, 1-29, 1997

[Non-patent Literature 8]: "Combinatorial Optimization - Theory and Algorithms," Springer-Verlag Tokyo, Nov. 2005

## Summary of the Invention

### Problem to be resolved by the Invention

In view of the foregoing, an object of the present invention is to optimize fairness of throughput in terminal devices in a wireless communication network, and to provide a technique for selecting combinations of the terminal devices and wireless network access.

### Means for resolving Problems

The present invention use the following means to resolve the aforementioned problem.

In other words, the present invention provides a method of selecting a wireless communication network of a connection target that optimizes throughput fairness of terminal devices in a wireless communication network system including a plurality of wireless access networks, and terminal devices that correspond to two or more wireless access networks (hereinafter referred to as "destination networks").

In particular, the present invention is preferably applied in a cognitive wireless communication network where the plurality of terminal devices can be connected while switching different destination networks.

This method includes modeling a problem combining terminal devices to be optimized and a destination network, as a minimum cost flow problem; calculating an exact solution of the minimum cost flow problem by computer operating means; and calculating the results of combining the terminal devices and the connection target network using network selection results operating means of a computer.

The configuration can be such that if the communication capacity of a destination network L(k) connected to a terminal device k is $C_{L(k)}$, and the number of terminal devices that are connected to the destination network L(k) is $N_{L(k)}$, a target function F that optimizes the fairness of throughput when the number of terminal devices is M is defined as

$$F = \sum_{k=1}^{M} \frac{1}{T_k} = \sum_{k=1}^{M} \frac{N_{L(k)}}{C_{L(k)}}$$

[Equation 1]

and a problem that combines the terminal devices and the destination network shown by this target function is modeled as a minimum cost flow problem; and in order to perform this modeling, the equation is converted to

$$F = \sum_{k=1}^{M} \frac{N_{L(k)}}{C_{L(k)}} = \sum_{j=1}^{P} \frac{N_j{}^2}{C_j} = \sum_{j=1}^{P} \sum_{n} \frac{2n-1}{C_j}$$

[Equation 2]

and operating means of a computer calculates an exact solution of the minimum cost flow problem, and thereby network selection results outputting means output the results of the combination of the terminal devices and the destination network.

The present invention can provide a selecting device for a wireless access network (hereinafter referred to as a destination network) that optimizes fairness of throughput of terminal devices in a wireless communication network system.

In other words, the present invention provides a computer equation storing means that stores an equation for modeling a problem combining terminal devices and a destination network to be optimized, as a minimum cost flow problem; computer calculating means for calculating an exact solution of the minimum cost flow problem based on the equation, and network selection results outputting means of a computer that output the results of combining the terminal devices and the connection target network.

The following equation can be used in the equation storing means of the network selecting device. If the communication capacity of a destination network L(k) connected to a terminal device k is $C_{L(k)}$, and the number of terminal devices that are connected to the destination network L(k) is $N_{L(k)}$, a target function F that optimizes the fairness of throughput when the number of terminal devices is M is defined by the aforementioned equation 1 and a problem that combines the terminal devices and the destination network shown by this target function is modeled as a minimum cost flow problem; and in order to perform this modeling, the equation is converted to the aforementioned equation 2 and stored.

Furthermore, the computer operating means calculates an exact solution of the minimum cost flow problem; and the network selection results operating means of the computer calculates the results of combining the terminal devices and the destination networks.

The present invention provides a wireless communication network system including a plurality of wireless access networks and a terminal device that corresponds to a plurality of types of wireless access networks, including: the network selecting device, wherein the terminal device and the wireless access networks are connected based on the output results of the network selecting device.

**Effect of the Invention**

The present invention provides the following effects by providing the aforementioned configuration.

In other words, a method of modeling that can be applied to a minimum cost flow problem was created by considering the selection problem of the wireless access network for the wireless network that has been an existing NP difficult optimization problem. An algorithm that calculates the known exact solution exists for the minimum cost flow problem, and the exact optimization of the selection problem is made possible by using this algorithm.

The optimization of the throughput fairness for the terminal can be achieved by this method.

In particular, modeling was achieved as a minimum cost flow problem by considering a plurality of branches that have different costs in between a base station and the initial node, because a squared term cannot be used for the known solution method of the minimum cost flow problem.

**Brief Description of the Drawings**

FIG. 1    is a block diagram of a wireless communication network according to the present invention;

FIG. 2    is a flow chart illustrating a network selection method in a wireless communication network;

FIG. 3    is an explanatory diagram of minimum cost problems according to the present invention;

FIG. 4    is an explanatory diagram related to modeling a minimum cost problems according to the present invention;

FIG. 5    is a block diagram of an RAN selection device and terminal device according to the present invention;

FIG. 6    is a block diagram of an RAN selection device and base station according to the present invention; and

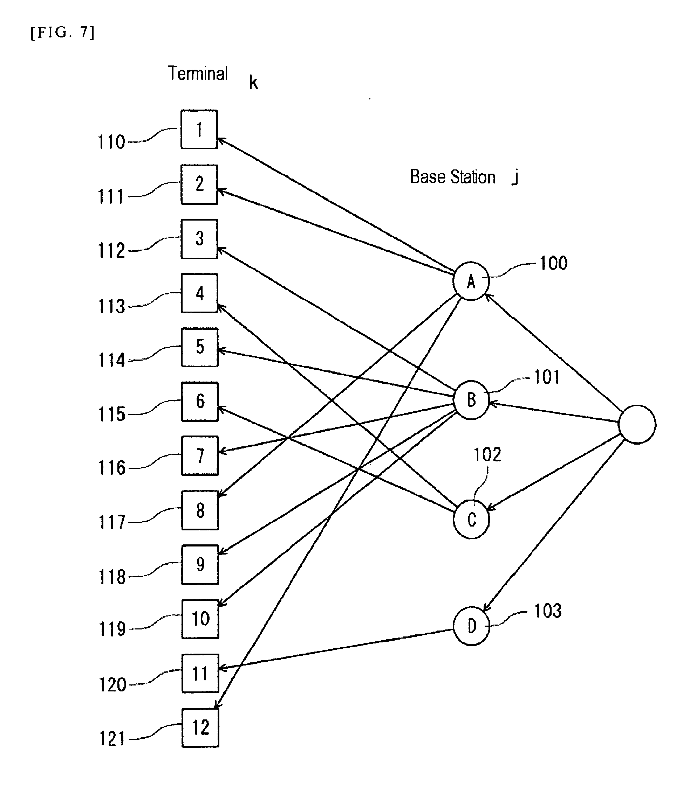

FIG. 7    is an experimental example of an RAN selection method according to the present invention.

**Description of Embodiment**

An embodiment of the present invention is described below based on the examples illustrated in the drawings. Note that an embodiment is not restricted to the following.

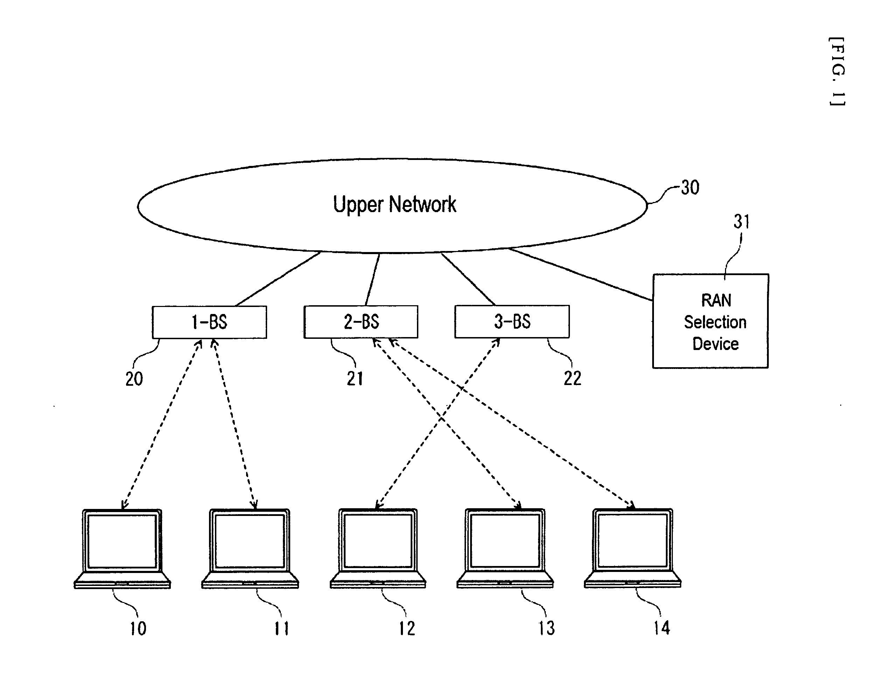

FIG. 1 is a block diagram of a wireless communication network according to the present invention. As illustrated, the embodiment is configured from a plurality of terminal devices (10) (11) (12) (13) (14), base stations (20) (21) (22), a higher network (30) such as the Internet connecting the base stations or the like, and a wireless network access (referred to hereinafter as RAN.) selection device (31) according to the present invention.

For a wireless communication network system, the terminal devices can connect to a plurality of various RAN even if the communication systems or the like are different. Communication is performed while switching the RAN to be connected based on the timing. A conventionally known method can be used as the method of switching the connection during communication.

An example of the present invention describes one RAN and one base station that correspond, but a different RAN can be configured in one base station. In other words, in some cases the frequency and modulation method differ, and an RAN providing a difference in communication capacity for each channel can be used.

FIG. 1 illustrates a state where terminal devices (10) (11) are connected to base station (20), terminal device (12) is connected to base station (22), and terminal devices (13) (14) are connected to base station (21). The base station has different communication capacity depending on various factors such as processing power, circuit with the upper network (30), or the like, and therefore, a base station with a high communication capacity can obtain sufficient throughput in each terminal even if simultaneously connected to a plurality of terminal devices, but there is a problem where the throughput is reduced when connected to a plurality when using a base station with low communication capacity.

From the perspective of the overall system, optimizing the throughput fairness of each terminal device is one solution for the RAN selection optimization problem of the network, and determining a solution by defining the objective function thereof is proposed by the present invention.

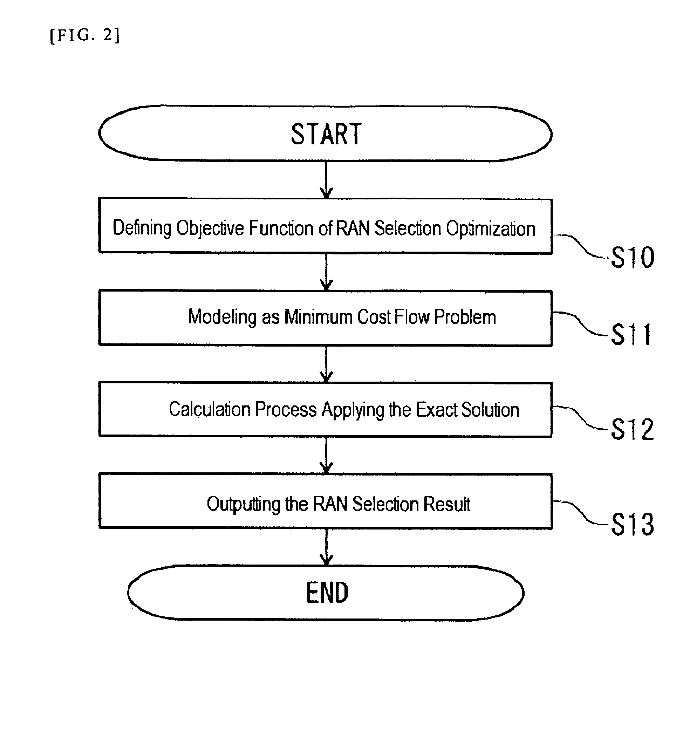

FIG. 2 is a flow chart illustrating a network selection method in a wireless communication network according to the present invention. Descriptions are made below based on the flow chart.

First, an objective function F of RAN selection optimization is defined. When communication capacity $C_j$ of base stations j are provided, a description state where the throughput difference between the terminal devices is the smallest is determined. However, the base stations are assumed to evenly distribute radio resources to all connected terminal devices.

In other words, if the number of terminals that are connected to j is Nj, the throughput of terminal k that is connected to the same base station j can be expressed as:

$$F = \sum_{k=1}^{M} \frac{1}{T_k} = \sum_{k=1}^{M} \frac{N_{L(k)}}{C_{L(k)}}$$

[Equation 1]

Note that M is the number of terminals, and L(k) is a base station to which terminal k connects. The function F is a minimum when $T_k$ are all equal. The problem is expressed as a combination optimization problem that determines a destination base station for each terminal.

The target function of RAN selection optimization is defined as described above (S10).

Next, a minimum cost flow problem is modeled (S11). The objective is to convert the problem to a minimum cost flow problem where an exact solution exists because the RAN selection problem is an NP hard problem as described above.

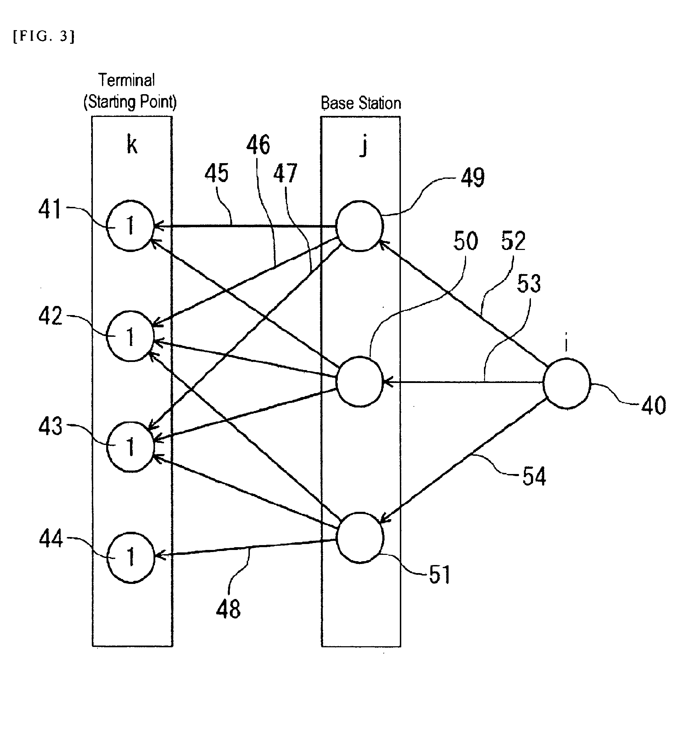

A minimum cost flow problem is a problem of determining the allotment for the amount of flow to each branch in order to minimize the total cost, when the flow flows from a starting point (40) of the network to each end point (41) through (44) as illustrated in FIG. 3. When the cost $cost_j$ of each branch, the capacity of each branch, and the amount of flow to flow to each end point k are provided, a flow xl is determined for each branch in order to minimize the sum of the cost $F = \Sigma_1 \, cost_1 \times x_1$.

Because there is an exact solution for the minimum cost flow problem, an exact solution can be achieved when reducing to the RAN selection problem of interest. An algorithm for determining the exact solution of the minimum cost flow problem is disclosed in cited document 8 according to A.V Goldberg for example, and the present invention appropriately uses a conventionally known solution, and therefore, a description is omitted.

In this document, the difference in calculation speed by the algorithm was tested, but a CS (cost scaling) method that is generally capable of the fastest calculation was used in the present invention.

Note that Non-patent Literature 8 also discloses the minimum cost flow problem.

With the present invention, the RAN selection problem is modeled as the minimum cost flow problem, and strictly optimized. The terminal devices are connected by selecting any base station, and therefore, the capacity of the branches (45) (46) (47)... (48) between the base stations (49) through (51) and the terminal devices are all set as 1.

The cost corresponding to the throughput reduction is assigned to each branch (52) through (54) between the base station and the starting point. Equation 1 is modified to a sum related to the base station j, and when adjusted, the equation becomes equation 3. Herein, P is the number of base stations.

$$F = \sum_{k=1}^{M} \frac{N_{L(k)}}{C_{L(k)}} = \sum_{j=1}^{P} \frac{N_j^2}{C_j}$$ [Equation 3]

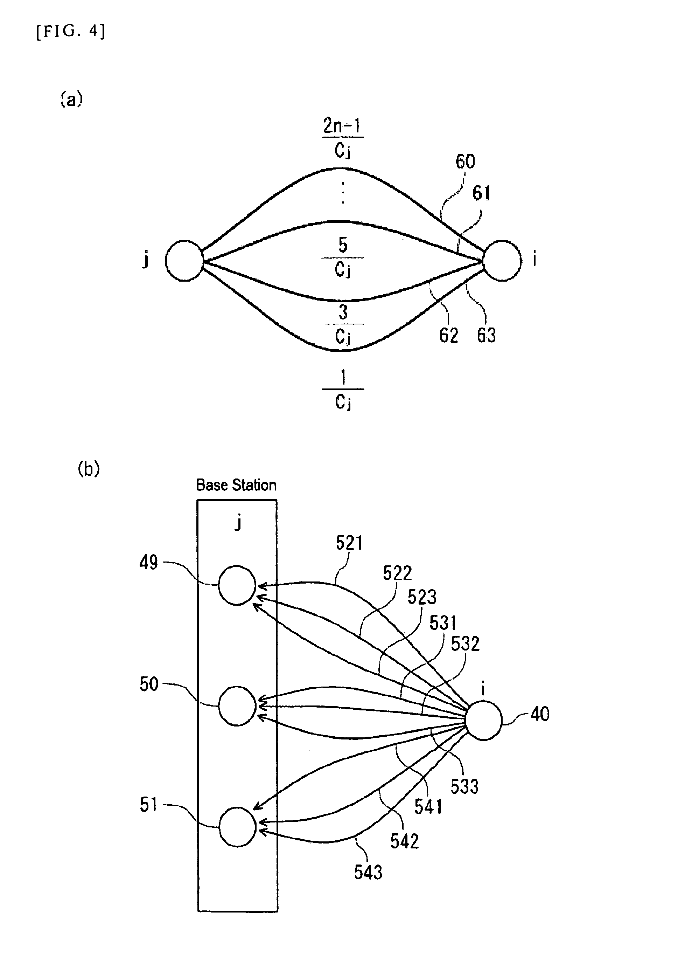

Herein, the minimum cost flow problem cannot use squared terms. Therefore, the number of branches (60) to (63) is prepared for the maximum number of terminals that can be connected to a base station as illustrated in FIG. 4 (a) between each base station and a starting point, and each branch is assigned a cost of $(2n-1)/C_j$. The squared term can be expressed by this sum. The target function is expressed as follows based on modification.

$$F = \sum_{j=1}^{P} \frac{N_j^2}{C_j} = \sum_{j=1}^{P} \sum_{n} \frac{2n - 1}{C_j}$$ [Equation 4]

When applied on a branch between the starting point and base station illustrated in FIG. 3, branches (521) through (543) as illustrated in FIG. 4(b) are taken into account.

A major feature of the present invention is that the solution for the minimum cost flow problem can be used by modeling the RAN selection optimization problem using this improvisation.

A branch with minimum cost is automatically selected, because the optimization algorithm is calculated from the smallest branch.

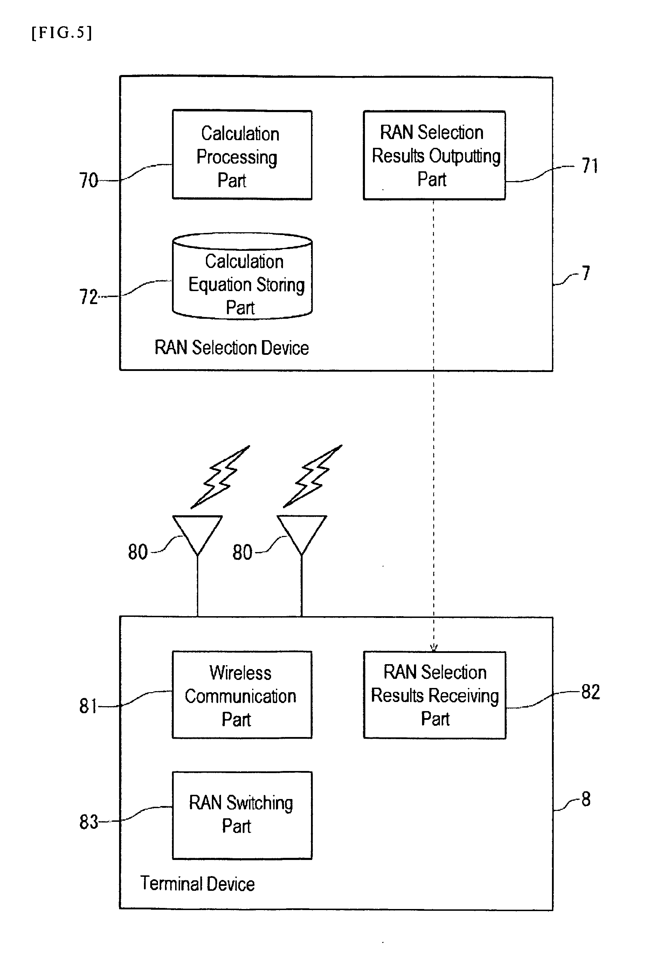

FIG. 5 is a block diagram of a RAN selecting device (7) and a terminal device (8) according to the present invention; The RAN selection device (7) is connected to the upper network as illustrated in FIG. 1, and is implemented using a conventionally known personal computer or the like. Furthermore, a calculation processing part (70) which is computing means, an RAN selection results outputting part (71) which is RAN selection results outputting means, and calculation equation storing part (72) which is calculation equation storing means are at least provided.

The terminal device (8) is a conventionally known communication terminal such as a personal computer, mobile phone, smart phone, or the like, and provides an antenna (80), a wireless communication part (81), an RAN selection results receiving part (82), and an RAN switching part (83) for wirelessly communicating with the RAN. When corresponding to wireless access networks with different frequencies, a plurality of antennas (80) can be provided corresponding thereto.

Furthermore, a problem combining terminal devices to be optimized and a base station (connection target network) are modeled as minimum cost flow problems, and a calculation equation is stored in the calculation equation storing part (72) of the RAN selection device (7). With the calculation processing part (70), an exact solution for the minimum cost flow problem is calculated in accordance with a conventionally known algorithm determining the aforementioned exact solution from the calculation equation. (FIG. 2, S12)

Furthermore, results combining terminal devices and a base station to be calculated are output by the RAN selection results outputting part (71). (S13)

The combination results are transmitted to the RAN selection results receiving part (82) of the terminal device (8) through the RAN during use with the upper network (30), and the RAN switching part (83) switches the base station destination base on the results.

Base on the aforementioned configuration, the RAN selection device (7) of the present invention calculates an exact solution for the RAN selection problem, and the terminal devices (8) can select the RAN based on the results. The exact solution optimizes the throughput fairness of the terminal devices in the overall system, and therefore, an optimized state is achieved as a result of switching base stations of the terminal devices (8).

The exact solution of the minimum cost flow problem adopted by the present invention is capable of high speed processing, and contributes to a fast and accurate RAN selection.

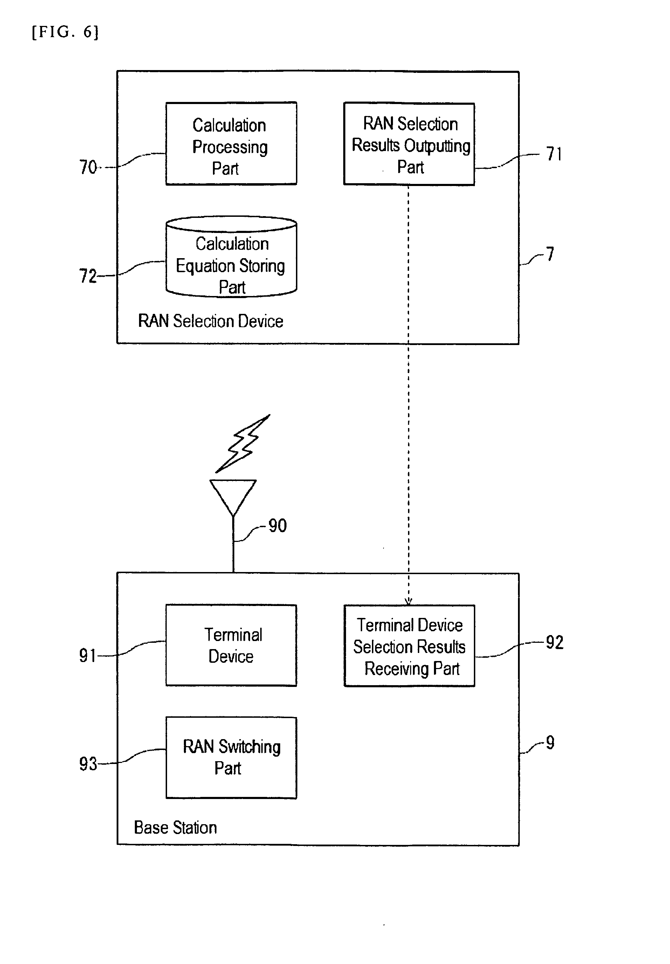

FIG. 6 is an alternative embodiment of the aforementioned, where the RAN selection device (7) transmits the RAN selection results to the base station (9), and the terminal device (8) connected to the base station is switched.

The base station (9) is a router or the like corresponding to communication having an antenna (90) and wireless communicating part (91), and provides a terminal device selection results receiving part (92) and terminal device switching part (93).

Furthermore, the aforementioned combination results is transmitted through the upper network (30) from the RAN selection results outputting part (71), and the terminal device selection results receiving part (92) receives the combination results. The terminal device switching part (93) switches the terminal device (8) to be connected based on the results.

With the present configuration, the throughput fairness of the terminal devices in the overall system is optimized in the same manner as described above.

Finally, an experimental example is presented where an algorithm that can be strictly acquired for a load distribution optimization problem is modeled using the present invention.

With the present experimental example, calculations are performed in an environment with four base stations (100) to (103) and twelve terminal devices (110) to (121).

The capacity of the base station A (100) and base station B (101) is 54 Mbps, the capacity of the base station C (102) is 21 Mbps, and the capacity of the base station D (103) is 11 Mbps.

Furthermore, an exact solution of the RAN selection problem according to the present invention was performed from inside the base station to which the terminals can connect, and a combination of the terminal devices and the base stations were calculated. Table 1 is shows the combination results.

Table 1:

| k No. | Capacity of Each Base Station [Mbps] | | | |
| --- | --- | --- | --- | --- |
| | A (54) | B (54) | C (21) | D (11) |
| 1 | O | | × | |
| 2 | O | × | | |
| 3 | | O | × | |
| 4 | × | × | O | |
| 5 | × | O | | × |
| 6 | | × | O | × |
| 7 | | O | × | |
| 8 | O | | × | |
| 9 | | O | | × |
| 10 | | O | | × |
| 11 | | | | O |
| 12 | O | | | × |

In Table 1, communication terminal 1 (110) can be connected to the base stations A and C, and of these, is shown to be connected to the base station A (100). The communication terminal 2 (111) can be connected to the base stations A and B, and is connected to the base station A (100). The same applies to others.

In view of the foregoing, four and five terminal devices are set to connect to the base station A (100) and base station B (101) respectively with large capacities, two are set to connect to the base station C (102) with the next smallest base station, and one was set to connect to the base station D (103) with the smallest capacity.

Based on these results, the combination where fairness of throughput in a communication terminal connected to the base stations is achieved can be confirmed.

The present invention optimizes the load distribution of the wireless communication network system, and is not restricted to the selection problem of the base station. The wireless access network is not restricted to corresponding to one base station as described above, and if a plurality of access network is configured in one base station, the wireless access network can be used as a selection problem.

### List of References:

10 to 14     Terminal Devices
20 to 22     Base Stations
30           Upper Network
31           RAN Selection Device

**Claims**

1. A network selection method for a wireless communication network which is a method of selecting a destination network that optimizes throughput fairness of terminal devices in a wireless communication network system including a plurality of wireless access networks, and terminal devices that correspond to a plurality of types of wireless access networks (hereinafter referred to as "destination network"), comprising:

   modeling a problem combining terminal devices to be optimized and a connection target network, as a minimum cost flow problem;
   calculating an exact solution of the minimum cost flow problem by computer operating means; and
   calculating the results of combining the terminal devices and the connection target network using network selection results operating means of a computer.

2. The network selection method for the wireless communication network according to claim 1, wherein if the communication capacity of a destination network L(k) connected to a terminal device k is $C_{L(k)}$, and the number of terminal devices that are connected to the destination network L(k) is $N_{L(k)}$, a target function F that optimizes the fairness of throughput when the number of terminal devices is M is defined as

$$F = \sum_{k=1}^{M} \frac{1}{T_k} = \sum_{k=1}^{M} \frac{N_{L(k)}}{C_{L(k)}} \qquad \text{[Equation 1]}$$

and a problem that combines the terminal devices and the destination network shown by this target function is modeled as a minimum cost flow problem; and in order to perform this modeling, the equation is converted to

$$F = \sum_{k=1}^{M} \frac{N_{L(k)}}{C_{L(k)}} = \sum_{j=1}^{P} \frac{N_j^2}{C_j} = \sum_{j=1}^{P} \sum_{n} \frac{2n-1}{C_j} \qquad \text{[Equation 2]}$$

and operating means of a computer calculates an exact solution of the minimum cost flow problem, and thereby network selection results outputting means output the results of the combination of the terminal devices and the destination network.

3. A network selection device for a wireless communication network which is a device of selecting a destination network that optimizes throughput fairness of terminal devices in a wireless communication network system including a plurality of wireless access networks, and terminal devices that correspond to a plurality of types of wireless access networks (hereinafter referred to as "destination network"), comprising:

   equation storing means of a computer that stores an equation for modeling a problem combining terminal devices to be optimized and a connection target network, as a minimum cost flow problem;
   operating means of a computer for calculating an exact solution of a minimum cost flow problem based on the equation; and
   network selection result outputting means of a computer that outputs the results of combining the terminal devices and the connection target network.

4. The network selecting device for the wireless communication network according to claim 3, wherein if the communication capacity of a destination network L(k) connected to a terminal device k is $C_{L(k)}$, and the number of terminal devices that are connected to the destination network L(k) is $N_{L(k)}$ in an equation storing means of the network selecting device, a target function F that optimizes the fairness of throughput when the number of terminal devices is M is defined as

$$F = \sum_{k=1}^{M} \frac{1}{T_k} = \sum_{k=1}^{M} \frac{N_{L(k)}}{C_{L(k)}}$$

[Equation 1]

and a problem that combines the terminal devices and the destination network shown by this target function is modeled as a minimum cost flow problem; and in order to perform this modeling, the equation is converted to

$$F = \sum_{k=1}^{M} \frac{N_{L(k)}}{C_{L(k)}} = \sum_{j=1}^{P} \frac{N_j^2}{C_j} = \sum_{j=1}^{P} \sum_{n} \frac{2n-1}{C_j}$$

[Equation 2]

and stored, and the operating means of a computer calculates an exact solution of the minimum cost flow problem, and thereby network selection results outputting means output the results of the combination of the terminal devices and the destination network.

5. A wireless communication network system including a plurality of wireless access networks and a terminal device that corresponds to a plurality of types of wireless access networks, comprising the network selecting device according to claim 3 or 4, wherein the terminal device and the wireless access networks are connected based on the output results of the network selecting device.

[FIG. 1]

[FIG. 2]

```
        ┌──────────────────────────────────────────┐
        │                   START                    │
        └──────────────────────────────────────────┘
                            │
                            ▼
        ┌──────────────────────────────────────────┐
        │ Defining Objective Function of RAN          │    S10
        │ Selection Optimization                      │
        └──────────────────────────────────────────┘
                            │
                            ▼
        ┌──────────────────────────────────────────┐
        │ Modeling as Minimum Cost Flow Problem       │    S11
        └──────────────────────────────────────────┘
                            │
                            ▼
        ┌──────────────────────────────────────────┐
        │ Calculation Process Applying the Exact      │    S12
        │ Solution                                    │
        └──────────────────────────────────────────┘
                            │
                            ▼
        ┌──────────────────────────────────────────┐
        │ Outputting the RAN Selection Result         │    S13
        └──────────────────────────────────────────┘
                            │
                            ▼
        ┌──────────────────────────────────────────┐
        │                    END                     │
        └──────────────────────────────────────────┘
```

[FIG. 3]

[FIG. 4]

(a)

(b)

[FIG.5]

[FIG. 6]

```
┌────────────────────────────────────────────────────────────┐
│                                                            │
│    ┌──────────────────┐        ┌──────────────────┐        │
│    │   Calculation    │        │  RAN Selection   │        │
│    │   Processing     │        │ Results Outputting│───── 71│
│ 70─┤      Part        │        │      Part        │        │
│    └──────────────────┘        └──────────────────┘        │
│                                                            │
│                                                       ── 7 │
│    ┌──────────────────┐                                    │
│    │   Calculation    │                                    │
│    │ Equation Storing │                                    │
│ 72─┤      Part        │                                    │
│    └──────────────────┘                                    │
│                                                            │
│    RAN Selection Device                                    │
└────────────────────────────────────────────────────────────┘
                                          │
                   ╲╱                     │
                    ╲                     │
                     ╲                    │
                      ▽ ── 90             │
                      │                   │
┌─────────────────────┼──────────────────┼───────────────────┐
│                     │                   ▼                   │
│    ┌──────────────────┐        ┌──────────────────┐        │
│    │    Terminal      │        │  Terminal Device │        │
│ 91─┤     Device       │        │ Selection Results│──── 92 │
│    └──────────────────┘        │  Receiving Part  │        │
│                                └──────────────────┘        │
│                                                       ── 9 │
│    ┌──────────────────┐                                    │
│    │  RAN Switching   │                                    │
│ 93─┤      Part        │                                    │
│    └──────────────────┘                                    │
│                                                            │
│    Base Station                                            │
└────────────────────────────────────────────────────────────┘
```

[FIG. 7]

Terminal  k

Base Station  j

110 — 1
111 — 2
112 — 3
113 — 4
114 — 5
115 — 6
116 — 7
117 — 8
118 — 9
119 — 10
120 — 11
121 — 12

100 — A
101 — B
102 — C
103 — D

## INTERNATIONAL SEARCH REPORT

| | International application No. |
|---|---|
| | PCT/JP2013/055306 |

**A. CLASSIFICATION OF SUBJECT MATTER**
*H04W48/16(2009.01)i, H04W24/02(2009.01)i*

According to International Patent Classification (IPC) or to both national classification and IPC

**B. FIELDS SEARCHED**

Minimum documentation searched (classification system followed by classification symbols)
H04W48/16, H04W24/02

Documentation searched other than minimum documentation to the extent that such documents are included in the fields searched
Jitsuyo Shinan Koho      1922-1996   Jitsuyo Shinan Toroku Koho   1996-2013
Kokai Jitsuyo Shinan Koho   1971-2013   Toroku Jitsuyo Shinan Koho   1994-2013

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2009-55467 A (National Institute of Information and Communications Technology), 12 March 2009 (12.03.2009), paragraphs [0036], [0074] to [0081]; fig. 1 (Family: none) | 1-5 |
| Y | Takashi TSUCHIYA, "Freshman no Tameno Seigyo Koza", JOURNAL OF THE SOCIETY OF INSTRUMENT AND CONTROL ENGINEERS, vol.42, no.4, 2003.04 | 1-5 |
| Y | Yoji KISHI, "BT-2-3 Senkei Keikakuho o Mochiita Network Sekkei no Jissai", The Institute of Electronics, Information and Communication Engineers 2006 Nen Society Taikai Koen Ronbunshu, 21 September 2006 (21.09.2006) | 1-5 |

☒  Further documents are listed in the continuation of Box C.    ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 April, 2013 (02.04.13) | 16 April, 2013 (16.04.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2013/055306 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2008-263612 A (NTT Docomo Inc.), 30 October 2008 (30.10.2008), paragraphs [0009] to [0013] & CN 101287280 A | 1-5 |
| P,X | "Rigorous Optimization of RAN Selection in Heterogeneous-Type Cognitive Radio Network", Proceedings of the 2012 IEICE General Conference Tsushin 1, The Institute of Electronics, Information and Communication Engineers, 20 March 2012 (20.03.2012), 627, B-17-29 | 1-5 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2009055467 A
- US 8098637 B
- JP 3425160 B

### Non-patent literature cited in the description

- **H. HARADA.** Software defined radio prototype toward Cognitive Radio Communication Systems. *IEEE Dyspan,* 2005, vol. 1, 539-547
- **G. WU ; P. HAVINGA ; D M. MIZUNO.** MIRAI Architecture for Heterogeneous Networks. *IEEE Comm. Mag.,* 2002, 126-134
- **M. INOUE ; K. MAHMUD ; H. MURAKAMI ; M. HASEGAWA ; H. MORIKAWA.** Novel Out-Of-Band Signaling for Seamless Inter-working between Heterogeneous Networks. *IEEE Wireless Commun.,* vol. 11 (2), 56-63, 2004
- **K.ISHIZU et al.** *IEICE Trans.,* 2010, vol. E93-B, 3311-3322
- IEEE Standard for Architectural Building Blocks Enabling Network-Device Distributed Decision Making for Optimized Radio Resource Usage in Heterogeneous Wireless Access Networks. *IEEE,* 09 February 2009
- **Y.FUKUDA ; YOIE.** Decentralized access point selection architecture for wireless LANs. *IEEE VTC2004-Fall,* 2004, 1103-1107
- **A.V.GOLDBERG.** *J.Algorithms,* 1997, vol. 22, 1-29
- Combinatorial Optimization - Theory and Algorithms. Springer-Verlag, 2005